(19) Europäisches Patentamt / European Patent Office / Office européen des brevets

(11) **EP 2 332 665 A1**

(12) **EUROPEAN PATENT APPLICATION**


(43) Date of publication:
**15.06.2011 Bulletin 2011/24**

(51) Int Cl.:
***B08B 7/00*** *(2006.01)* ***G03G 9/08*** *(2006.01)*
***G03G 9/113*** *(2006.01)* ***B01D 11/02*** *(2006.01)*

(21) Application number: **10193984.1**

(22) Date of filing: **07.12.2010**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **08.12.2009 JP 2009278314**
**29.03.2010 JP 2010074363**



(71) Applicant: **Ricoh Company Ltd.**
**Tokyo 143-8555 (JP)**

(72) Inventors:
- **Ohtaki, Kazumi**
  **Tokyo 143-8555 (JP)**
- **Yagi, Shinichiro**
  **Tokyo 143-8555 (JP)**
- **Yashiro, Masakazu**
  **Tokyo 143-8555 (JP)**
- **Kakimoto, Masayuki**
  **Tokyo 143-8555 (JP)**
- **Shimizu, Takayuki**
  **Tokyo 143-8555 (JP)**

(74) Representative: **Barz, Peter**
**Meissner Bolte**
**Widenmayerstrasse 48**
**80538 München (DE)**


(54) **Method for treating electrophotographic carrier, method for producing electrophotographic carrier, core material and carrier**


(57) A method for treating an electrophotographic carrier, including treating with supercritical pure water the electrophotographic carrier containing at least a core material and a coating layer, so that the coating layer is separated from the core material, wherein the supercritical pure water is obtained by bringing into a supercritical state pure water having an electrical conductivity at 25°C of 1 μS·cm or lower.


FIG. 3

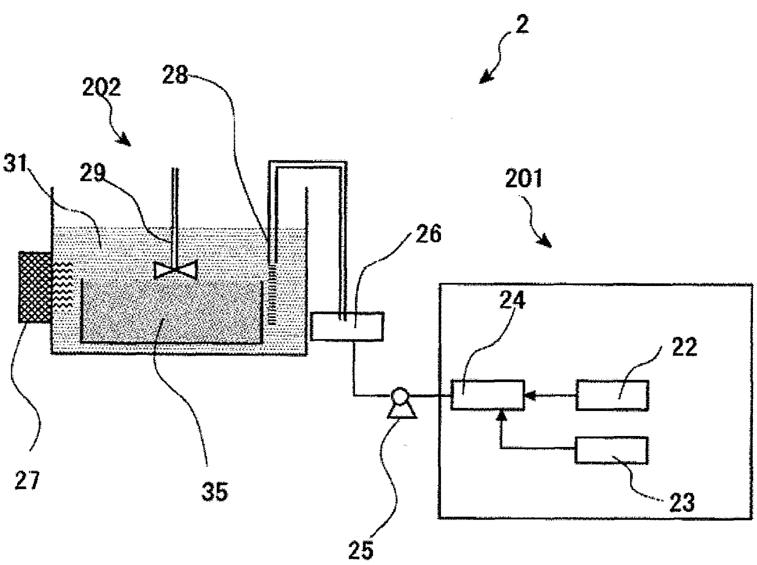


EP 2 332 665 A1

## Description

BACKGROUND OF THE INVENTION

Field of the Invention

The present invention relates to recycling and reutilizing core materials forming carriers of two-component electrostatic image developers used in, for example, electrophotography and electrostatic recording.

Description of the Related Art

Two-component dry developers used for electrophotography each contain toner and carrier particles. In the two-component dry developers (hereinafter may be referred to simply as a "developer"), fine toner particles are retained on relatively large particles by magnetic force generated as a result of friction between both the particles. When such two-component dry developers become close to latent electrostatic images, the electrical fields in the latent electrostatic images attract the toner particles at a greater force than the binding force between the toner and carrier particles. As a result, the toner particles are attracted and attached onto the latent electrostatic images, which are then visualized.

Carriers contained in the two-component dry developers treated by the present invention include at least core materials (i.e., magnetic particles) and a resin. The carrier particles are classified into a coating-type carrier in which a layer made mainly of a coating layer is formed on the surface of a relatively large magnetic particle, and a dispersion-type carrier in which relatively small magnetic particles are uniformly dispersed in a resin. Whether the coating-type carrier or the dispersion-type carrier is used is appropriately determined. In many cases, the coating-type carrier is used in practice.

The developers are repeatedly used in image forming apparatuses while the consumed toner particles are being replenished. Thus, the carrier particles must frictionally charge the toner particles constantly so that the toner particles have a sufficient charge amount at a desired polarity over a long period of time.

However, conventional developers tend to change in chargeability, since the surface conditions of their carrier particles change due to mechanical collision, for example, between the particles or between the particles and the developing apparatus. For example, cracking, fracture and abrasion in the carrier surface may cause a change in the surface conditions. In addition, a toner film may be formed on the carrier surface due to heat generated as a result of friction (so-called toner spent). In such cases, the chargeability of the carrier particles decreases over time, and it becomes necessary that the developer itself is replaced. Hitherto, various improvements have been made to prevent degradation of chargeability of the carrier. For example, the coating layer has been improved or the adhesion between the magnetic material surface and the coating layer has been improved, in order to increase the mechanical strength against cracking, fracture and abrasion in the carrier surface.

Various resins have been proposed as coating resins, but in particular, there are many proposals regarding crosslinked resins capable of increasing the mechanical strength. In general, acrylic resins, polyester resins and silicone resins are used in combination with various crosslinking agents and additives.

Examples of the proposed resins and methods include a method of crosslinking a resin containing a polycarbodiimide resin (see Japanese Patent Application Laid-Open (JP-A) No. 05-127432), a method of crosslinking an acrylic resin having a specific property and structure (see JP-A Nos. 05-216282 and 05-216283), a method of forming a coating resin having a composite crosslinked structure consisting of urethane and urea (see JP-A No. 05-197211), a method of using a silicone resin having a specific silane coupling agent (see JP-A No. 07-114221), and a method of forming a coating resin by crosslinking an alcoholic hydroxyl group-containing resin with a phenolic hydroxy group-containing resin (see JP-A No. 08-87137). In addition, there have been proposed methods in which a resin is polymerized directly onto the surface of magnetic materials. Examples thereof include a method of interfacially polymerizing and subsequently crosslinking a resin material coated on the surface of core materials (see JP-A No. 06-194881).

Furthermore, methods are proposed for applying various resins onto the surface of carriers to prevent toner spent. For example, the hardness of coated silicone resins is allowed to be higher (see Japanese Patent Application Publication (JP-B) No. 62-61948).

However, all of the above proposals are to improve the mechanical strength or stability to heat, or to prevent toner spent. Thus, crosslinked resins are used as coating resins and coated very firmly onto the core materials. Therefore, it is generally difficult to separate the coating layer from the core material. And, care is not taken for the separation between the core material and the coating layer.

Conventionally, the degraded developers after use have been recovered and disposed of. However, along with the recent environmental destruction by industrial wastes, recycling of the developers is one of the problems awaiting solution. As for reutilizing these developers, two methods have been known, one of which is to remove spent toner from the carrier surface so as to restore developer's characteristics (method A), and the other is to remove coating layers on

carriers to thereby recover core materials which are then provided again with coating layers to restore developer's characteristics (method B).

The former method (method A) is exemplified by JP-A No. 06-149132, in which spent toner particles on the carrier surface are removed by heating or washing with solvents so as to recycle core materials. In this method, the core materials are recycled without removing the previously coated resins. This method can mainly recycle carriers degraded in characteristics due to toner spent.

However, when degradation in characteristics of carriers is caused by not only toner spent but also cracking, fracture and abrasion in the carrier coating resin, the characteristics of the carriers cannot be restored and recycled only by removing spent toner. Also, some spent toner is difficult to remove even by the technique described in JP-A No. 06-149132. Thus, demand has arisen for methods of removing spent toner more strongly. Meanwhile, washing with a solvent gives environmental load in condensation of the post-treatment of the solvent itself. Therefore, there is a need to develop a method that gives a less degree of environmental load.

The latter method (method B) is exemplified by JP-A No. 47-12286, in which the recovered developer is heated at a high temperature of about 1,000°F for recycling. When this method is applied to carriers coated with thermoplastic resins such as, for example, acrylic resins, not only the spent toner but also the coated resin can be removed through such thermal treatment. Even when degradation in characteristics of the carrier results from not only spent toner but also cracking, fracture and abrasion in the carrier coating resin, the treated core materials are recycled after coated again upon reuse.

However, when the above method is applied to a carrier whose core material is made of a ferrite material provided with necessary magnetic characteristics using metal suboxides, there are disadvantages such as difficulties in restoring the characteristics of these core materials. In addition, it is desirable this method be carried out in a manner that also recycles the heat generated during treatment to thereby reduce undesirable environmental effects. However, since a small amount of inflammable materials, which generate combustion heat, are contained in the carrier constituents, efficient thermal recycling may not be achieved.

Also when this method is applied to a carrier whose core material is a thermosetting resin, the present inventors confirmed that the thermosetting resin (coating resin) cannot be sufficiently removed. Furthermore, the present inventors have found that, when the core materials still have the coating resin and the products of the high-temperature heating treatment, recycled carriers formed using the above core material have less desirable characteristics compared with carriers formed using virgin core materials. That is, the characteristics of developers using such recycled core materials are clearly inferior to those of developers using virgin core materials. This difference in performance is smaller when the previously coated resin is removed thoroughly. Therefore, in order for the developer characteristics of these two developers to be comparable, it is desirable that the residual core coating resin be smaller or that the removal rate of the coating resin be higher.

For the above-described reasons, regarding the conventional two-component developer carriers, the known methods utilized for separating the coating materials from the magnetic materials for recycling are not satisfactory in practice, since these methods are not capable of reliably removing the resin materials in an environmentally friendly manner and also degrade the characteristics of the core materials.

Indeed, the conditions of the conventional methods do not meet at the same time the goals of both removing the resin materials which are tightly bonded chemically and mechanically to the core materials and retaining desirable properties of magnetic materials. In particular, none of the conventional methods is applied to magnetic particles made of coating resin and metal suboxide particles having a specific crystal structure, to thereby recover the magnetic particles without inducing oxidation or reduction of the metal suboxide, breaking the crystal state thereof and degrading their magnetic characteristics. That is, magnetic materials for use in core materials are made of suboxides having a specific crystal structure, and thus, it is necessary to avoid any chemical change, for example, oxidation and/or any change in crystal structure during the recycling treatment. JP-A No. 05-53000 proposes decomposing the resin in water having a supercritical or subcritical state. With this method, many resins can be hydrolized or thermodecomposed to monomer units.

As to the decomposition of resins, there have been proposed a method in which a thermosetting resin is decomposed in water brought into a supercritical or subcritical state (see JP-A No. 10-24274), a method in which chlorine-containing plastic wastes are decomposed in supercritical water serving as a reaction medium and converted into oil (see JP-A No. 09-111249) and other methods. These methods are performed mainly for decomposing a lot of resin wastes for detoxification and recycling. Also, these patent literatures disclose the treatment conditions suitable for the materials to be treated.

Meanwhile, in order to recycle a carrier, there has been proposed a method in which the resin is decomposed under subcritical conditions using aqueous hydrogen peroxide as a fluid (see JP-A No. 2007-206614). With this method, although a specific coating resin can be removed to some extent, the oxidation effects by the aqueous hydrogen peroxide greatly impair the characteristics of magnetic particles of a specific crystalline metal suboxide. In particular, the aqueous hydrogen peroxide allows the resistance of the magnetic particles to be higher than unused core materials, or changes

(decreases) the magnetic characteristics of the magnetic particles. Thus, use of the aqueous hydrogen peroxide is not necessarily suitable to recycling of the core materials. In addition, the aqueous hydrogen peroxide has corrosive effects, and causes an unfavorable phenomenon of corrosion of the carrier surface.

Furthermore, there has been proposed a method in which a carrier composed of a magnetic material and a resin layer, which contains at least a fluorine-containing resin and is coated on the magnetic material, is brought into contact with subcritical water to remove the resin layer, in the state that the ratio of the subcritical water to the carrier has been adjusted to a specific ratio (see Japanese Patent (JP-B) No. 4244197). However, the fluorine-containing resin is poorly removed under subcritical conditions. In addition, distilled water used as a treatment solvent does not have such a low electrical conductivity that is comparable to pure water; i.e., contains impurities such as ions, and thus, the removal of the fluorine-containing resin tends to be decreased by the impurities.

The present applicant has proposed methods in which a carrier composed of a magnetic material and a coating resin is treated with supercritical or subcritical water, to thereby separate the coating resin from the magnetic material (see JP-B Nos. 3847534 and 3853159).

Specifically, the method disclosed in JP-B No. 3847534 uses aqueous hydrogen peroxide as a treatment liquid under supercritical or subcritical conditions. As described above, the removal of the resin tends to be decreased under subcritical conditions, and also, the oxidation effects by the aqueous hydrogen peroxide greatly impair the characteristics of magnetic particles of a specific crystalline metal suboxide.

The method disclosed in JP-B No. 3853159 uses distilled water as a treatment liquid under supercritical or subcritical conditions.

As described above, the removal of the resin tends to be decreased under subcritical conditions, and also, distilled water does not have such a purity that is comparable to pure water. As a result, the removal of the resin tends to be decreased by the impurities.

Although a lot of resins have been found to be decomposed under supercritical or subcritical conditions as described above, not all the resins can be decomposed. The "Advanced Research Project for Utilizing Supercritical Fluid" issued in 1997 by New Energy Development Organization leading "New Sunshine Project" reports on the decomposition of several thermosetting resins. As an example for the thermosetting resins, a phenol resin is reported to have a low decomposition rate after treated in supercritical water, which involves so-called charring. This also reports that other resins have different appropriate decomposition conditions. Moreover, JP-A Nos. 10-80674, 10-87872, other patent literatures have proposed treatment methods and the conditions which especially target composite materials of resins (e.g., fiber reinforced plastics) used as structural materials for ships and other materials. These patent literatures propose various treatment conditions and processes for specific materials in consideration of the form and usage of the materials.

The inventions disclosed in JP-A Nos. 10-80674 and 10-87872 intend to separate a resin from a core material made of, for example, a fiber, and no description could be found of recycling the core material and a change in characteristics of the core material. In particular, none of them describes that the inventions are applied to magnetic particles made of a coating resin and metal suboxide particles having a specific crystal structure, to thereby recover the magnetic particles without inducing oxidation or reduction of the metal suboxide, breaking the crystal state thereof and degrading their magnetic characteristics. Furthermore, core materials used in electrophotographic carriers are magnetic materials having a certain particle diameter range and are highly controlled so that their shape becomes spherical as much as possible. In the above literatures, no description has been presented regarding the effects on the shape and size of the magnetic particles, which may be caused by supercritical or subcritical water.

Although supercritical or subcritical water is effective to the treatment of the target material as described above, it is important to set the treatment conditions from the economical point of view. Especially when the amount of water used is larger than that of the target material, the cost for heat energy may considerably influence the cost for the treatment. However, a certain amount of water is necessary to desirably treat the target material. That is, water must be used in such an amount that the coated resin on the developer carrier can be satisfactorily removed. The more the amount of water used per unit by mass of the target material, the more reliably the coating resin can be removed. However, the treatment cost is increased with increasing the amount of the water used, and thus, it is necessary to find the conditions to meet both the desired performance and the desired cost in the treatment.

## BRIEF SUMMARY OF THE INVENTION

A first object of the present invention is to provide a method for treating an electrophotographic carrier and a method for producing an electrophotographic carrier, which can separate a two-component electrophotographic developer's carrier into a magnetic material (core material) and a coating layer (coating resin), which has previously been coated on the magnetic material firmly, without adversely affecting the characteristics of the core material. The obtained core material can be coated again with a coating layer and then exhibit satisfactory performances. In other words, the present invention aims to provide an improved separation means and a recycling method which include reliably removing the coating layer in an environmentally friendly manner without degrading the characteristics of the core material. That

is, the treated core material can be recycled.

A second object of the present invention is to provide economical treatment conditions under which a carrier coating resin can be reliably removed in an environmentally friendly manner.

A third object of the present invention is to provide a core material whose coating layer (resin) has been removed and a carrier obtained by newly coating the core material with a coating layer.

The present inventors performed extensive studies to achieve the above objects, and have unexpectedly found that supercritical pure water is effective to the achievement of the above objects.

The present invention is based on the above finding obtained by the present inventors, and means for solving the existing problems are as follows.

< 1 > A method for treating an electrophotographic carrier, including:

treating, with supercritical pure water, the electrophotographic carrier containing at least a core material and a coating layer, so that the coating layer is separated from the core material,

wherein the supercritical pure water is obtained by bringing, into a supercritical state, pure water having an electrical conductivity at 25°C of 1 $\mu$S·cm or lower.

< 2 > The method according to < 1 >, further including washing the core material with a washing liquid containing bubbles having small particle diameters.

< 3 > The method according to any one of < 1 > and < 2 >, wherein the coating layer comprises a silicone resin.

< 4 > The method according to any one of < 1 > to < 3 >, wherein the supercritical pure water is obtained at a supercritical temperature of 375°C to 400°C and a supercritical pressure of 22 MPa to 30 MPa.

< 5 > The method according to any one of < 2 > to < 4 >, wherein the washing liquid used in the washing is microbubble water containing bubbles having an average particle diameter of 100 $\mu$m or lower.

< 6 > The method according to any one of < 1 > to < 5 >, wherein the core material is made of at least a magnetic material.

< 7 > The method according to < 6 >, wherein the magnetic material is ferrite or magnetite.

< 8 > The method according to any one of < 1 > to < 7 >, further including reducing, over time, the amount of decomposed or dissolved matter of a material forming the coating layer in the supercritical pure water brought into contact with the carrier.

< 9 > The method according to any one of < 1 > to < 8 >, further including reducing, over time, the amount of decomposed or dissolved matter of a material forming the coating layer in the supercritical pure water supplied to a container holding the carrier.

< 10 > The method according to any one of < 1 > to < 9 >, wherein the carrier is a used carrier in an electrophotographic developer.

< 11 > A method for producing an electrophotographic carrier, including:

separating a coating layer from the electrophotographic carrier with the method according to any one of < 1 > to < 10 > to thereby recover a core material, and
coating the core material with a coating layer for reuse.

< 12 > A core material obtained through separation of a coating layer with the method according to any one of < 1 > to < 10 >.

< 13 > A carrier including:

the core material according to < 12 >, and a coating layer,

wherein the core material is coated with the coating layer.

The method of the present invention for treating an electrophotographic carrier (i.e., the method for separating a coating resin from a core material made of a magnetic material) is a method of treating a carrier contained in a used developer with supercritical pure water, which is obtained by bringing pure water having an electrical conductivity (25°C) of 1 $\mu$S·cm or lower into a supercritical state, so that the coating resin is separated from the core material through hydrolysis and/or thermodecomposition. Unlike the conventional methods, the method of the present invention has advantageous effects that the coating resin can be removed reliably and efficiently in an environmentally friendly manner and that the coating resin can be removed at a higher removal rate without degrading the core material itself.

The method of the present invention for treating an electrophotographic carrier has an advantage effect that it attains more efficient decomposition when the supercritical pure water used for treating the carrier is obtained at 375°C

or higher and 25 MPa or higher.

The method of the present invention for treating an electrophotographic carrier has an advantageous effect that, by treating with supercritical pure water a carrier to be treated which has a core material made of at least a magnetic material and a coating resin film, the coating resin film is reliably separated from the core material of the magnetic material.

The method of the present invention for treating an electrophotographic carrier has an advantageous effect that it can treat the carrier containing ferrite or magnetite as the magnetic material without degrading the core material itself, since ferrite or magnetite are relatively stable in supercritical pure water.

In the method of the present invention for treating an electrophotographic carrier, by reducing over time decomposed and/or dissolved matter of the coating resin materials contained in the supercritical pure water brought into contact with the carrier to be treated, the coating resin can be reliably separated from the carrier to be treated containing undecomposed matter in a large amount. Furthermore, the treatment can be performed with high thermal efficiency.

The method of the present invention for producing an electrophotographic carrier is a method including separating a carrier into a core material and a coating resin by the above-described treating method; washing the core material simultaneously with or subsequent to the separating; and drying the core material. According to this method, the core material that have conventionally been disposed of can be recycled, which realizes contribution to the protection of the global environment. In addition, active ingredients such as resin monomers can be recycled from the treatment liquid, which also leads to the environmental protection.

The method of the present invention has advantageous effects that the coating resin can be completely separated from the carrier and that thermal energy can be utilized effectively. As described above, since the core material (magnetic material) whose coating resin has been separated by the method of the present invention is not degraded in characteristics, the core material can be recycled.

## BRIEF DESCRIPTION OF THE DRAWINGS

Fig. 1A illustrates the entirety of a reaction container used in the present invention.

Fig. 1B illustrates a sample to be treated (carrier) and a fluid (pure water) housed in the reaction container.

Fig. 2 illustrates a fluidized sand bath for heating the fluid housed in the reaction container to a predetermined temperature.

Fig. 3 illustrates the configuration of a washer used in the method of the present invention for treating an electrophotographic carrier.

## DETAILED DESCRIPTION OF THE INVENTION

The method of the present invention for treating an electrophotographic carrier includes treating, with supercritical pure water, the electrophotographic carrier (carrier to be treated) containing at least a core material and a coating layer, so that the coating layer is separated from the core material (separating step), wherein the supercritical pure water is obtained by bringing pure water having an electrical conductivity (25°C) of 1 μS·cm or lower into a supercritical state. Specifically, in the method of the present invention for separating the coating layer from the core material (magnetic material) in the carrier to be treated, the carrier contained in a developer (in general, a used developer) is subjected to separation treatment using supercritical water (pure water), so that the coating layer is separated from the magnetic material through hydrolysis and/or thermodecomposition and dissolution.

The method of the present invention for treating an electrophotographic carrier includes at least a separating step, preferably includes a washing step; and, if necessary, further includes other steps.

### < Separating step >

The separating step is a step of treating, with supercritical pure water, an electrophotographic carrier containing at least a core material and a coating layer (coating resin), so that the coating layer is separated from the core material, wherein the supercritical pure water is obtained by bringing pure water having an electrical conductivity (25°C) of 1 μS·cm or lower into a supercritical state.

Water used for the supercritical pure water in the present invention is pure water having an electrical conductivity (25°C) of 1μ S·cm or lower, preferably ultra pure water having an electrical conductivity (25°C) of 0.1 μS·cm or lower. Such ultra pure water, having a low electrical conductivity, contains almost no impurities such as ions, and thus degrades the quality of core materials during supercritical treatment to a less extent. Meanwhile, water having an electrical conductivity higher than 1 μS·cm contains impurities such as ions in a larger amount, and thus may degrade the quality of core materials during supercritical treatment. In addition, the effect of removing (separating) the resin becomes weak.

Notably, use of compounds having strong bactericidal and decomposing effects (e.g., aqueous hydrogen peroxide) not only removes/separates the coating resin but also impairs the quality of core materials due to their oxidizing effects, which is not preferred.

In general, the electrical conductivity (25°C) of water is introduced as follows.

Table 1

| | Electrical conductivity (μS·cm) |
|---|---|
| Ultra pure water | 0.06 |
| Pure water | 1 |
| Distilled water | 1 to 10 |
| Tap water | 100 to 200 |

Regarding the carrier to be treated and the fluid (pure water) brought into contact with the carrier in a supercritical state during supercritical treatment, the mixing ratio between the carrier and the fluid cannot be determined flatly. In order to complete the separation treatment once, the mass of the fluid (pure water) is preferably three times or more greater than that of the carrier to be treated. At this mixing ratio, the coating removal can be performed satisfactorily.

Also, in the method of the present invention for treating an electrophotographic carrier, the separation treatment with supercritical pure water is preferably performed for 1 min to 90 min. Although this treatment time varies with the properties of the coating resin used and on the temperature/pressure conditions for supercritical pure water, it is preferably 1 min to 60 min, more preferably 2 min to 30 min.

Further, the method of the present invention for treating an electrophotographic carrier is a method of treating a carrier to be treated which has a core material and a crosslinked resin coated thereon-this resin is hardly dissolved in a solvent, etc.-in water having a supercritical state, so that the coating resin is reliably separated from the magnetic material.

Further, the method of the present invention for treating an electrophotographic carrier is a method of treating a carrier to be treated which has a core material made of at least a magnetic material and a silicone resin coated thereon-this coating resin (silicone resin) is not easily decomposed through combustion, etc.-in water having a supercritical state, so that the coating resin is reliably separated from the magnetic material.

Moreover, the method of the present invention for treating an electrophotographic carrier is a method of treating a carrier to be treated which has a core material made of at least a magnetic material and a coating resin film made mainly of a silicone resin-this resin is hardly separated even by various separation means such as a solvent, an acid, a base and combustion-in water having a supercritical state, so that the coating resin is reliably separated from the magnetic material.

The form of the magnetic material-containing carriers treated by the method of the present invention is roughly classified into two types: carriers having relatively large magnetic particles and a layer made mainly of a coating resin present on the particle surfaces, and carriers containing a resin and relatively small magnetic powder homogeneously dispersed in the resin. In either carrier, the present invention is applicable.

The magnetic materials contained in the carrier treated by the method of the present invention may be those conventionally known in the art. Examples thereof include ferromagnetic metals such as iron, cobalt and nickel; alloys such as magnetite, hematite and ferrite; and complexes formed between resins and microparticles of the above ferromagnetic metals. The average particle diameter of the magnetic particles is generally about 10 μm to about 1,000 μm. Notably, under the conditions for supercritical pure water, some of the magnetic materials are oxidized or hydrolyzed. Thus, magnetic materials that are more stable under these conditions are preferably used. Examples of the magnetic materials preferably treated by the method of the present invention include metal oxide magnetic materials such as ferrite and magnetite. Ferrite is stable in supercritical pure water and thus, can be separated without degradation of the core material itself. It may be noted, even for the materials which may be relatively easily degraded by water having a supercritical state, such degradation may be obviated by appropriately setting the conditions such as temperature, pressure, treatment time and/or additives considering the coating resin used.

In the separation procedure, the treatment with supercritical pure water is preferably performed under non-oxidizing conditions. Also, this treatment is more preferably performed under both non-oxidizing and non-reducing conditions from the viewpoint of preventing degradation of the magnetic materials.

After the carrier treated with supercritical pure water has been subjected to a step of washing the magnetic materials to remove matter attached thereonto and then to a drying step, the magnetic materials used for the carrier can be coated again with a resin. In an example of the step of washing the magnetic materials to remove matter attached

thereonto, the surfaces of the core materials are mechanically frictioned with stirring, whereby attached matter can be removed more reliably. Moreover, an ultra sonic washer may also be used, but the below-described washing step is particularly preferably performed.

< Washing step >

The washing step is a step of washing separated core materials with a washing liquid (water) which contains bubbles having small particle diameters.

The water containing bubbles having small particle diameters preferably has an electrical conductivity of 10 μS·cm or lower. More preferably, the water has an electrical conductivity of 1 μS·cm or lower; i.e., contains almost no ions. When the water used for the washing step contains a large amount of ions like tap water (electrical conductivity: higher than 10 μS·cm), the ions are attached during washing onto the surfaces of the core materials separated from the coating resin, potentially impairing chemical and physical characteristics of the core materials.

Also, when the water used for washing contains bubbles having small particle diameters, the impact generated upon disruption of the bubbles separates, from the core material surfaces, the separated resin coating components, re-attached matter of fillers contained in the coating resin, and the coating resin and fillers remaining after the separation treatment. Thus, in the washing step, the resin, filler and stains present on the core material surfaces can also be removed to some extent.

In the washing step, while being immersed in water containing bubbles having small particle diameters (microbubbles or nanobubbles), the core materials are washed under application of ultra sonic vibration, and then the supernatant is removed. And, the washing liquid, containing the treated core materials, is filtrated through aspiration.

The washing is performed two or three times, preferably three or five times. The amount of the residual matter such as the separated coating resin components and fillers decreases with increasing the number of the washing treatments. In particular, when the fillers used for controlling resistance remain on the core material surfaces, the magnetic characteristics-one important property-are decreased, which is not preferred. When the number of the washing treatments is more than five, the productivity or yield is disadvantageously decreased.

Therefore, by washing the core materials while removing the developer-forming resins, fillers, and decomposed or dissolved matter contained in the water after separation and washing, the amount of the materials remaining on the surfaces of the carrier core materials can be reduced, and also a decrease in magnetic characteristics can be prevented. Similarly, when the water from which carrier-forming resins, fillers and decomposed or dissolved matter remaining after separation and washing have been removed is supplied to a container housing and holding the developer, the amount of the materials remaining on the core material surfaces can be reduced, and also a decrease in magnetic characteristics can be prevented.

A method of the present invention for producing an electrophotogaraphic carrier includes treating the carrier with supercritical pure water, so that its coating resin is separated from its core material through hydrolysis and/or thermodecomposition and dissolution; and washing the core material simultaneously with or subsequent to the treating; and drying the core material.

In the process of recovering, washing and drying, the core materials are allowed to pass through a coarse screen, to thereby remove coarse magnetic materials having particle diameters larger than the desired particle diameter, which are formed unexpectedly or when the coating resin layer has not completely been separated; and the core materials are allowed to pass through a fine screen, to thereby remove fine magnetic materials having particle diameters smaller than the desired particle diameter, which are formed through friction and crash.

Needless to say, when recycled as carrier core materials, the core materials may be mixed with virgin core materials. In addition, active ingredients such as resin monomers can be recycled from the treatment liquid. Also, in the method of the present invention for separating the carrier coating resin from the core material, by reducing over time decomposed and/or dissolved matter of the developer-forming materials contained in the supercritical pure water brought into contact with the carrier to be treated, the coating resin can be reliably separated from the carrier to be treated containing undecomposed matter in a large amount. Furthermore, the treatment can be performed with high thermal efficiency. The core materials whose coating resin has been separated are newly coated with a resin (preferably, a silicone resin) to thereby obtain carriers.

Furthermore, in an early stage from the time when the material to be treated (the carrier to be treated) is charged into the treatment system, by bringing the supercritical pure water (hot water), which has been used for the previous treatment, into contact with the material to be treated, thermal energy can be utilized effectively. Also, the method of the present invention for separating the carrier coating resin from the magnetic material exhibits the same effects as described above in a reaction device composed of a container and pipes.

The form of the magnetic material-containing carriers treated by the method of the present invention is roughly classified into two types: carriers having relatively large magnetic particles and a layer made mainly of a coating resin present on the particle surfaces, and carriers containing a resin and relatively small magnetic powder homogeneously

dispersed in the resin. In either carrier, the present invention is applicable.

The magnetic materials (core materials) contained in the carrier treated by the method of the present invention may be those conventionally known in the art. Examples thereof include ferromagnetic metals such as iron, cobalt and nickel; alloys such as magnetite, hematite and ferrite; and complexes formed between resins and microparticles of the above ferromagnetic metals. The average particle diameter of the magnetic particles is generally about 10 μm to about 1,000 μm. Notably, under the conditions for supercritical pure water, some of the magnetic materials are oxidized or hydrolyzed. Thus, magnetic materials that are more stable under these conditions are preferably used. Examples of the magnetic materials preferably treated by the method of the present invention include metal oxide magnetic materials such as ferrite and magnetite. It may be noted, even for the materials which may be relatively easily degraded by water having a supercritical state, such degradation may be obviated by appropriately setting the conditions such as temperature, pressure, treatment time and/or additives considering the coating resin used.

The coating resin of the carrier in the present invention may be resins conventionally known in the art. As described above, silicone resins or modified products thereof are preferably used. Examples of such resins forming the coating layer include polyolefin resins such as polyethylenes, polypropylenes, chlorinated polyethylenes and chlorosulfonated polyethylenes; polyvinyl or polyvinylidene resins such as polystyrenes, acrylic resins (e.g., polymethyl methacylates), polyacrylonitriles, polyvinyl acetates, polyvinyl alcohols, polyvinyl butyrals, polyvinyl chlorides, polyvinyl carbazoles, polyvinyl ethers and polyvinyl ketones; vinyl chloride-vinyl acetate copolymers; silicone resins having organosiloxane bonds and modified products thereof (e.g., alkyd resin-, polyester resin-, epoxy resin- and polyurethane-modified silicone resins); fluorine-containing resins such as polytetrafluoroethylenes, polyvinyl fluorides, polyvinylidene fluorides and polychlorofluoroethylenes; polyamides; polyesters; polyurethanes; polycarbonates; amino resins (e.g., urea-formaldehyde resins); and epoxy resins. Of these, from the viewpoint of preventing toner spent, preferred are silicone resins and modified products thereof, and fluorine-containing resins. Particularly preferred are silicone resins and modified products thereof.

Silicone resins usable in the present invention may be selected from those conventionally known in the art. Examples thereof include straight silicones having only organosiloxane bonds expressed by the following formula; and silicone resins modified by alkyd, polyester, epoxy or urethane.

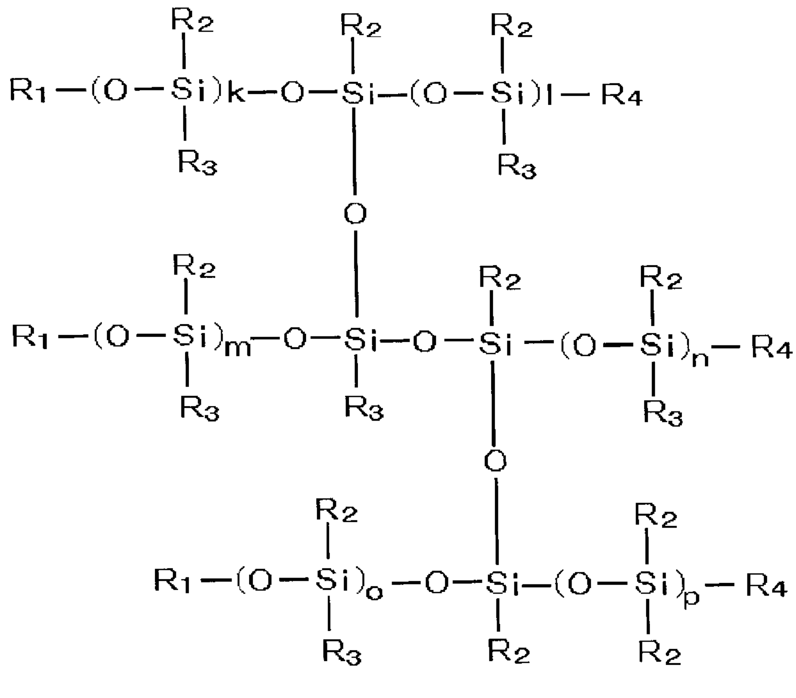

In the above formula, $R_1$ represents a hydrogen atom, a C1-C4 alkyl group or a phenyl group, and $R_2$ and $R_3$ each represent a hydrogen atom, a C1-C4 alkoxy group, a phenyl group, a phenoxy group, a C2-C4 alkenyl group, a C2-C4 alkenyloxy group, a hydroxyl group, a carboxyl group, an ethylene oxide group, a glycidyl group or a group represented by the following formula.

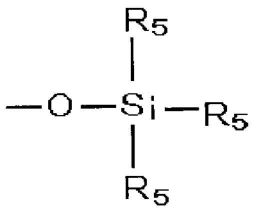

Also, in the above formulas, $R_4$ and $R_5$ each represent a hydroxyl group, a carboxyl group, a C1-C4 alkyl group, a C1-C4 alkoxy group, a C2-C4 alkeny group, a C2-C4 alkenyloxyl group, a phenyl group or a phenoxy group, and each of k, 1, m, n, o and p is an integer of 1 or greater.

Each of the above-described substituents may have no substituent or may have a substituent such as an amino group, a hydroxyl group, a carboxyl group, a mercapto group, an alkyl group, a phenyl group, an ethylene oxide group, a glycidyl group or a halogen atom.

Further, the resin material may be crosslinked in the presence of a crosslinking agent through, for example, a thermal treatment. The coated layer of such a thermally crosslinked resin material is generally insoluble to a solvent, an acid and a base. Also, the materials which are formed during the thermal treatment (e.g., carbide) may be attached onto the surfaces of magnetic materials. However, the method of the present invention can reliably separate such matter from the magnetic materials, while it is difficult for the other methods to do so.

Among others, coating layers of silicone resins cured are quite difficult to remove. This is because the silicone resins are stable to various acids and bases, insoluble in solvents, and hard to decompose even by combustion. The silicone resins usable in the present invention may be selected from those conventionally known in the art. Specific examples of the silicone resins include those commercially available from Shinetsu Silicones Co., such as KR261, KR271, KR272, KR275, KR280, KR282, KR285, KR251, KR155, KR220, KR201, KR204, KR205, KR206, SA-4, ES-1001, ES1001N, ES-1002T and KR3093; and those commercially available from Toray-Dow Corning Co., such as SR2100, SR2101, SR2107, SR2110, SR2108, SR2109, SR2115, SR2400, SR2410, SR2411, SH805, SH806A and SH840.

The carriers used in the present invention may contain a conductivity-imparting material dispersed in their coating layers for the purpose of controlling the volume conductivity thereof. The conductivity-imparting material may be those conventionally known in the art, such as metals (e.g., iron, gold and copper), iron oxides (e.g., ferrite and magnetite) and pigments (e.g., carbon black). In particular, use of fine conductive powder mixture of furnace black (one carbon black) and acetylene black can effectively control conductivity even in a small amount. In addition, the obtained carriers can have coating layers excellent in abrasion resistance.

Such fine conductive particles preferably have a particle diameter of about 0.01 μm to about 10 μm, and are preferably added in an amount of 2 parts by mass to 30 parts by mass, more preferably 5 parts by mass to 20 parts by mass, per 100 parts by mass of the coating resin. Notably, there is no particular influence to the treatment in the present invention, even when materials such as the above fine conductive particles are contained in the coating resin.

In addition, a silane coupling agent, a titanium coupling agent, or other agents may be added to the carrier coating layer, in order to improve the adhesion to core materials and the dispersibility of the conductivity-imparting material.

For example, the silane coupling agent used in the present invention is expressed by the following general formula.

$$YRSiX_3$$

where X represents a hydrolyzable group, which is bonded to an Si atom, such as a chloro group, an alkoxy group, an acetoxy group, an alkylamino group and a propenoxy group.

Y represents an organic functional group which reacts with an organic matrix, such as a vinyl group, a methacryl group, an epoxy group, a glycidoxy group, an amino group and a mercapto group.

R represents a C1-C20 alkyl or alkylene group.

Of these silane coupling agents, preferred are aminosilane coupling agents where Y is an amino group in the above formula, in order to obtain a developer having negative chargeability; while preferred are epoxysilane coupling agents where Y is an epoxy group in the above formula, in order to obtain a developer having positive chargeability.

Carrier particles treated by the method of the present invention, are actually recovered as a used developer, which is a mixture of carrier and toner particles. Although this mixture may be directly subjected to supercritical treatment, the toner particles are preferably separated from the carrier particles prior to the supercritical treatment, since the toner particles can be easily separated. For this separation, an electrostatic treatment such as the blowing-off method may

be performed. In contrast, spent toner on carriers is difficult to separate therefrom. Thus, the spent toner may be removed at a pretreatment step prior to the supercritical treatment. For example, the spent toner may be subjected to cleaning with a solvent or a thermal treatment. The incorporation of the toner particles, however, does not have a considerable adverse effect on the separation of the magnetic materials from the resin materials, since the separation can be sufficiently performed even with some toner particles incorporated upon the supercritical treatment.

In the present invention, supercritical pure water used for treating carrier may be appropriately prepared at a temperature of 375°C to 400°C and a pressure of 22 MPa to 30 MPa, preferably at a temperature of 380°C to 390°C and a pressure of 25 MPa to 28 MPa. When the above conditions are satisfied, the coating resin can be efficiently decomposed.

Within the above ranges, more preferred ranges are selected depending on the composition of the coating resin and the magnetic materials of the carrier to be treated. Specifically, the conditions are suitably determined so that the coating resin is rapidly decomposed and the magnetic materials are not degraded. In addition, since the treatment time can be shortened with increase in the pressure and temperature, both may preferably be adjusted as high as possible. For example, the temperature is set to a high temperature of 380°C or higher, and the pressure is set to a high pressure of 25 MPa or higher.

In the present invention, in the step of separating the coating resin from the magnetic materials in carriers, it may also be sufficient for the coating resin to be partially removed. That is, when deterioration is observed only in the vicinity of the surface thereof, the removal of the resin in that portion may be sufficient. In addition, since the resin decomposition by the supercritical pure water is initiated at the surface region of the carrier particles, the extent of the decomposition can be controlled by, for example, the decomposition time. Further, the rate of the coating resin removed is preferably 70% or higher, more preferably 80% or higher, most preferably 90% or higher.

The rate of the coating resin removed is preferably higher, especially in order to stabilize the production process. This is because, especially when a mixture of treated core materials and virgin core materials is coated, the differences in the core materials may influence the performance of the resultant developer. The treated core materials whose coating layers have been removed to a higher extent could be treated in the same production conditions as in the virgin core materials, and thus need no particular treatments when used.

When the washing step of washing the treated core materials is performed in addition to the separating step of separating the coating resin in supercritical water, the core materials obtained had neither coating resin nor re-attached matter of the matter separated from the core material surfaces.

Through the above treatment, the core materials that have conventionally been disposed of can be recycled, which realizes contribution to the protection of the global environment. In addition, active ingredients such as resin monomers can be recycled from the treatment liquid, which also leads to the environmental protection.

When the carrier treated with supercritical pure water is subjected to a step of washing the core materials (i.e., magnetic materials) to remove matter attached thereonto, and then a drying step, the magnetic materials used for the carrier can be successfully coated again with a resin.

In the step of washing the magnetic materials to remove matter attached thereonto, the surfaces of the core materials are mechanically frictioned with stirring, whereby the attached matter can be removed more reliably. Moreover, an ultra sonic washer may also be used, but the carrier whose coating resin has been removed is particularly preferably washed with water containing bubbles having small particle diameters equal to or smaller than those of microbubbles or nanobubbles.

The water containing bubbles having small particle diameters comparable to those of microbubbles or nanobubbles preferably has an electrical conductivity of 10 $\mu$S·cm or lower. The water preferably has an electrical conductivity of 1 $\mu$S·cm or lower; i.e., contains almost no ions.

When the water used for the washing step contains a large amount of ions like tap water (electrical conductivity: 10 $\mu$S·cm or higher), the ions are attached during washing onto the surfaces of the core materials separated from the coating resin, potentially impairing chemical and physical characteristics of the core materials.

Also, when the water used for washing contains bubbles having small particle diameters comparable to those of microbubbles or nanobubbles, the impact generated upon disruption of the bubbles separates, from the core material surfaces, the separated resin coating components, re-attached matter of fillers contained in the coating resin, and the coating resin and fillers remaining after the separation treatment.

In the washing step, while being immersed in water containing bubbles having small particle diameters (microbubbles or nanobubbles), the core materials are washed under application of ultra sonic vibration, and then the supernatant is removed through overflow. And, the washing liquid, containing the treated core materials, is filtrated through aspiration.

The washing is performed two or three times, preferably three or five times. The amount of the residual matter such as separated coating resin components and fillers decreases with increasing the number of the washing treatments. In particular, when the fillers used for controlling resistance remain on the core material surfaces, the magnetic characteristics-one important property-is decreased, which is not preferred.

Moreover, the method of the present invention for separating carrier core materials from coating resin thereof is a method of treating a carrier to be treated which has a core material made of at least a magnetic material and a coating resin film made mainly of a silicone resin-this resin is hardly separated even by various separation means such as a solvent, an acid, a base and combustion-in water having a supercritical state, so that the coating resin is reliably separated from the magnetic material.

Here, Fig. 1A illustrates the entirety of a reaction container used in the present invention, and Fig. 1B illustrates a sample to be treated (carrier) and a fluid (pure water) housed in the reaction container.

As illustrated in Figs. 1A and 1B, an inner cylinder 111 of a reaction container 11, housed in a housing portion 15, contains liquid 31 and a developer 32 to be treated. The liquid 31 may be a solvent such as water and alcohol. The liquid 31 is preferably water, since supercritical or subcritical water can be easily prepared. In addition, bubbles having small particle diameters can be easily formed as compared with the other solvents, since water has a high surface tension.

The reaction container 11 and the inner cylinder 111 are made of austenitic stainless steels such as SUS316. The austenitic stainless steels are hardly rusted, have high strength, and have no magnetism, and thus are suitable to the treatment of the developer 32 containing magnetic materials. The reaction container 11 measures 8.5 mm in inner diameter and 2.1 mm in thickness, and has a capacity of 109 $cm^3$ for housing the developer 32, etc. The reaction container 11 is immobilized with screws so that the inner pressure thereof is not changed.

Fig. 2 illustrates the configuration of a separating apparatus used for the method of the present invention for treating a carrier.

As illustrated in Fig. 2, a separating apparatus 1 includes a heating device 12 which houses the reaction container 11. In the heating device 12, fluidized sand 33 containing alumina powder is contained in the housing portion 15 which houses the reaction container 11. And, a heater 13 for heating the housing portion 15 is provided around the housing portion 15. In addition, the separating apparatus 1 further includes a compressor 14 for feeding hot air 34 to the housing portion 15 and another heater 13 for heating air. The developer 32 is placed in the reaction container 11, which is then purged with argon or other gas, followed by pressurizing. A plurality of the reaction containers 11 are housed in the housing portion 15 of the heating device 12. The reaction container can be uniformly heated by the heating device 12 and the fluidized sand 33 circulated with the air 34. The reaction container 11 is placed for a predetermined period in the fluidized sand 33 whose temperature has set to a predetermined temperature.

Supercritical water is formed at a high temperature and a high pressure in the reaction container 11, where the carriers can be separated into the resins and the core materials.

After the predetermined heating period, the reaction container is quenched in a cooling bath containing ice, etc., and returned to the normal temperature and pressure, followed by removal of the separated core materials and other matter. In this manner, the carriers can be separated into the core materials and the coating resins.

Fig. 3 illustrates the configuration of a washer used in the method of the present invention for treating a carrier.

The washer 2 includes a microbubble- or nanobubble-generator 201 (hereinafter referred to as a "bubble generator") and a tank 202.

The bubble generator 201 includes a pressurized water-supplying section 22 (which supplies pressurized water), a pressurized air-supplying section 23 (which supplies pressurized air) and a gas-liquid mixing section 24 (which mixes the supplied water and the supplied air). In the gas-liquid mixing section, the pressurized water and air are formed into water containing bubbles having small particle diameters. The formed gas-liquid mixture (microbubble or nanobubble liquid) is fed by a feeding pump 25 into a stock tank 26.

The tank 202 contains water and the core materials whose resins have been separated by the separating apparatus 2. The tank further includes an ultrasonic oscillator 27 and an impellor 29. Here, the ultrasonic oscillator gives mechanical friction to the core material surfaces; and the impellor prevents the separated resins, etc. from re-attaching onto the core material surfaces, to thereby more reliably remove the attached matter.

The gas-liquid mixture containing bubbles having small particle diameters are jetted from the stock tank 26 through a jetting portion 28 into the tank 202 containing water and core materials, whereby the core materials are washed.

The water used for the treatment in the present invention is so-called microbubble water containing bubbles having particle diameters of 100 μm or smaller. The average particle diameter of the bubbles is measured with a laser diffraction/scattering particle diameter analyzer (LDSA3400A, product of TOHNICHI APPLICATIONS K.K.).

When the core materials to be washed have small particle diameters, the diameters of the bubbles are preferably those of nanobubbles smaller than microbubbles; i.e., 1 μm or smaller. The bubbles having smaller diameters can effectively wash the residual matter off from the concave portions of the core materials. In contrast, the bubbles having larger diameters cannot effectively wash the residual matter off from the inside of the concave portions. Also, during washing in water containing nanobubbles or microbubble, when ultrasonic vibration is applied to the core materials whose coating resins have been removed and the water is stirred with the impellor, the washing effect can be further increased. Without stirring the water with the impellor, the attached matter separated from the core materials remain in the vicinity of the core materials and may remain on the core materials, which is not preferred.

When mechanical friction is applied to the core material surfaces with stirring, the attached matter can be

removed more reliably. Moreover, an ultra sonic washer may also be used, but the employable apparatus/treatment is not limited thereto.

Examples

The present invention will next be described by way of examples, which should not be construed as limiting the present invention thereto.

< Example A1 >

The production example of a carrier treated by the method of the present invention is given below.

(Production of carrier)

A coating layer-forming liquid having the following composition was prepared.
Silicone resin (SR2400; product of Toray-Dow Corning Co.): 50 parts by mass
Toluene: 150 parts by mass
Alumina (aluminum oxide; product of Sumitomo Chemical Co., Ltd): 3 parts by mass
The thus-prepared coating layer-forming liquid was applied onto the surface of spherical ferrites (core materials) (1,000 parts by mass) having an average particle diameter of 50 μm with a fluidized-bed coater, to thereby form coating layers. In this manner, carrier particles A were obtained.
The carrier particles A (97 parts by mass) were mixed with commercially available toner particles (product of Ricoh Company, Ltd., Imagio Toner Type 7) (7 parts by mass) to thereby obtain developer A.
The thus-obtained developer A was subjected to 500,000 copying operations using a copier Imagio MP5000 (product of Ricoh Company, Ltd.), to thereby obtain a used developer. After this developer had been taken out from the copier, the toner particles of the developer were electrically removed by the blow-off method. At this time, the degree of toner spent on the carrier surface was very small. The thus-obtained sample was used as treated sample A1.

(Treatment in supercritical pure water)

Treated sample A1 (0.5 parts by mass) and pure water having an electrical conductivity of 0.98 μS·cm (1.0 part by mass) were charged into a pressure-resistant reaction container made of SUS 316 (inner volume: 10 mL). Subsequently, the pressure-resistant reaction container was pressurized by supplying pressurized argon gas (1 MPa) from the top of the container and then left to stand for 1 min. Thereafter, the pressure-resistant reaction container was reduced in pressure to the atmospheric pressure over about 30 sec. The pressurization/depressurization was performed three times. Subsequently, the pressure-resistant reaction container was purged with argon gas and then sealed. This reaction container was placed in a fluidized sand bath heated to 380°C. As a result, the interior of the pressure-resistant reaction container reached 380°C and 25 MPa. One hour after, the pressure-resistant reaction container was taken out and quenched in ice water.
The pressure-resistant reaction container was opened, and then the reaction product was transferred from the reaction container to a glass container. In the reaction product transferred to the glass container, black/gray relatively large particles were found to sediment, which were ferrite particles. Also, the pure water became a white turbid suspension, which contained the coating layer itself and eluted particles of filler (alumina) of the coating layer. In addition, a trace amount of oily components were also attached onto the glass wall.
After removal of the supernatant in the glass container, pure water (100 mL) having an electrical conductivity of 0.98 μS·cm was added to the glass container, followed by washing for 5 min with an ultrasonic washer. Then, only the sedimented particles (black/gray particles) were taken out and dried for one hour in a thermostat drier at 100°C, whereby Evaluation Sample A1 was obtained.
Through observation of Evaluation Sample A1 under a scanning electron microscope, almost all the silicone resin was removed. In Evaluation Sample A1, the rate of the silicone resin removed (coating layer-removal rate) was found to be 90%, and a change in magnetic characteristics was found to be 0.6% relative to core materials before use.

(Evaluation of the degree of separation between magnetic material and coating resin)

[Surface observation by SEM]

Platinum was vacuum-evaporated on Evaluation Sample A1, and the resultant sample was observed with a scanning electron microscope S-2400 (product of Hitachi Ltd.) under the conditions of an acceleration voltage of 15 kV

and 2,000 magnification. As a result, almost all the silicone resin coating layer was found to be removed/separated from the surface of Evaluation Sample A1.

Notably, the following evaluation criteria were used:

A: The surface of the sample was almost the same as that of a core material before coating of a coating resin;
B: The surface of the sample had a slight amount of residual debris of the resin;
C: About half of the surface of the sample was still covered with the coating resin;
D: A small area of the surface of the core material was exposed;
E: The surface of the core material was not exposed since almost no coating resin could be removed.

(Measurement of electrical conductivity of pure water)

The electrical conductivity of pure water was measured with an electrical conductivity meter ES-51 (handy type) (product of HORIBA Ltd.). The electrical conductivity of the pure water used in Example A1 was found to be 0.98 μS·cm as described above.

(Confirmation of removal of coating layer)

Using an X-ray microanalyzer EMAX2700 (product of HORIBA Ltd.), elemental analysis was performed on the surface of Evaluation Sample A1. The amount of Si detected in Evaluation Sample A1 was compared with the amount of Si detected in carrier particles A, to thereby calculate the rate of the silicone resin removed (removal rate or coating layer-removal rate) according to the following equation:

$$\text{Removal rate (\%)} = \{(\text{Amount of Si detected in carrier particles A}) - (\text{Amount of Si detected in Evaluation Sample A1}) / (\text{Amount of Si detected in carrier particles A})\} \times 100$$

Notably, the following evaluation criteria were used:

A: The coating layer-removal rate was 90% or higher;
B: The coating layer-removal rate was 80% or higher but lower than 90%;
C: The coating layer-removal rate was 70% or higher but lower than 80%;
D: The coating layer-removal rate was 30% or higher but lower than 70%;
E: The coating layer-removal rate was lower than 30%.

As described above, the coating layer-removal rate was found to be 90% in Example A1.

(Evaluation of magnetic characteristics)

In order to confirm a change in magnetic characteristics due to the film-removal treatment, the sample was measured for magnetic characteristics. Using a compact full-automatic vibration sample magnetometer VSM-C7-10A (product of TOEI INDUSTRY CO., LTD), the sample was measured for saturation magnetization, remnant magnetization and coercive force.

As a result, the magnetic characteristics of the Evaluation Sample were comparable to those of core materials before use.

Regarding magnetic characteristics, the following evaluation criteria based on a change relative to the saturation magnetization value (under application of 1 kOe) of core materials before coating:

A: The change was 3% or lower;
B: The change was more than 3% but 6% or lower;
C: The change was more than 6% but 10% or lower;
D: The change was more than 10% but 13% or lower;
E: The change was more than 13%.

As described above, the change was found to be 0.6% in Example A1.

< Example A2 >

The procedure of Example A1 was repeated, except that the interior of the pressure-resistant reaction container was adjusted to 400°C in temperature and to 30 MPa in pressure, to thereby obtain Evaluation Sample A2.
Through observation of Evaluation Sample A2 under a scanning electron microscope, almost all the silicone resin was found to be removed. In Evaluation Sample A2, the rate of the silicone resin removed was found to be 80%, and a change in magnetic characteristics was found to be 3.6% relative to core materials before use.

< Example A3 >

The procedure of Example A1 was repeated, except that the fluid used for supercritical treatment was changed from pure water to re-purified ultra pure water (electrical conductivity: 0.09 μS·cm), to thereby obtain Evaluation Sample A3.
Through observation of Evaluation Sample A3 under a scanning electron microscope, almost all the silicone resin was removed from the surfaces of the particles similar to Evaluation Sample A1, but a slight amount of foreign matter was included. In Evaluation Sample A3, the rate of the silicone resin removed was found to be 85%, and a change in magnetic characteristics was found to be 1.5% relative to core materials before use.

< Example A4 >

The procedure of Example A1 was repeated, except that the spherical ferrites (core materials) having an average particle diameter of 50 μm were changed to spherical magnetites (core materials) having an average particle diameter of 40 μm, to thereby obtain Evaluation Sample A4.
Through observation of Evaluation Sample A4 under a scanning electron microscope, almost all the silicone resin was removed from the surfaces of the particles. In Evaluation Sample A4, the rate of the silicone resin removed was found to be 90%, and a change in magnetic characteristics was found to be 1.0% relative to core materials before use.

< Comparative Example A1 >

The procedure of Example A1 was repeated, except that the amount of treated sample A1 charged into the pressure-resistant reaction container was changed from 0.5 parts by mass to 0.4 parts by mass and that the pure water was changed to aqueous hydrogen peroxide (concentration: 3%), to thereby obtain Evaluation Sample A5.
Through observation of Evaluation Sample A5 under a scanning electron microscope, the silicone resin was found to be removed from the surfaces of the particles similar to Evaluation Sample A2. However, Evaluation Sample A5 was found to be decreased in magnetic characteristics by 10% or higher as compared with core materials before use. Also, in Evaluation Sample A5, the rate of the silicone resin removed was found to be good (95%). But, a change in magnetic characteristics was found to be large (13.6%) relative to core materials before use; i.e., the magnetic characteristics were considerably degraded.

< Comparative Example A2 >

The procedure of Example A1 was repeated, except that the fluid used for supercritical treatment was changed from pure water to distilled water (electrical conductivity: 1.6 μS.cm), to thereby obtain Evaluation Sample A6.
Through observation of Evaluation Sample A6 under a scanning electron microscope, the silicone resin was found to still remain on the surfaces of the particles. In Evaluation Sample A6, the rate of the silicone resin removed was found to be 75%. Also, a change in magnetic characteristics was found to be 5.0% relative to core materials before use; i.e., the magnetic characteristics were considerably degraded.

< Comparative Example A3 >

The procedure of Example A1 was repeated, except that subcritical treatment was performed using, as a fluid, pure water (electrical conductivity: 0.98 μS.cm), to thereby obtain Evaluation Sample A7.
Through observation of Evaluation Sample A7 under a scanning electron microscope, much of the silicone resin was found to still remain on the surfaces of the particles. In Evaluation Sample A7, the rate of the silicone resin removed was found to be 29%; i.e., the silicone resin could not be removed very much. Also, a change in magnetic characteristics was found to be 3.6% relative to core materials before use.

Table 2 collectively shows evaluation results of Examples A1 to A4 and Comparative Examples A1 to A3 (i.e., physical characteristics of the core materials and the carriers). Notably, the overall evaluation in Table 2 is in accordance with the following criteria based on all the evaluation results:

A: The core materials can be recycled directly;
B: The core materials need a slight treatment for recycling;
C: The core materials need a treatment for recycling;
D: The core materials need a treatment involving a change in conditions;
E: The core materials are difficult to recycle even after treatment and change of conditions.

Table 2

| Items | | Untreated core material | Ex. A1 | Ex. A2 | Ex. A3 | Ex. A4 | Comp. Ex. A1 | Comp. Ex. A2 | Comp. Ex. A3 |
|---|---|---|---|---|---|---|---|---|---|
| Characteristics of treated core materials | Surface conditions in SEM image | | *1 | *2 | *3 | *4 | *5 | *6 | *7 |
| | | Evaluation of surface conditions | A | B | A | A | A | D | E |
| | Removal of coating layer | Removal rate of coating layer | 90% | 80% | 85% | 90% | 95% | 75% | 29% |
| | | Evaluation of removal rate | A | B | A | A | A | D | E |
| | Saturation magnetization (at 1 kOe) | Change in saturation magnetization | 0.6 % | 3.6 % | 1.5 % | 1.0 % | 13.6% | 5.0% | 3.6% |
| | | Evaluation of change | A | B | B | A | E | B | B |
| Overall evaluation | | | A | B | A | A | D | D | E |

*1: Almost all the coating layer was removed and the surfaces of the core materials were exposed to a considerable extent. A slight amount of debris was observed. Good.

*2: Almost all the coating layer was removed and the surfaces of the core materials were exposed to a considerable extent. But, debris was observed entirely on the surfaces.

*3: The coating resin could be satisfactorily removed to the same extent as in the case where pure water was used. Good.

*4: The coating layer could be satisfactorily removed to the same extent as in the case where the spherical ferrite was used as core materials. Good.

*5: The coating layer could be satisfactorily removed to almost the same extent as in Example A1.

*6: The coating layer remained in a considerable amount judging from the image; i.e., the coating layer could not be removed sufficiently.

*7: The coating layer could not be removed apparently.

As is clear from the above evaluation results, according to the method of the present invention for separating a carrier coating resin from a core material of a magnetic material, the carrier coating resin can be reliably separated

with less adverse effects to the environment. In addition, the method is advantageous in that the removal rate of the coating resin can be higher as well as the core materials themselves are not degraded.

< Example B1 >

The production example of a carrier treated by the method of the present invention is given below.

(Production of carrier)

A coating layer-forming liquid having the following composition was prepared.
Silicone resin (SR2400; product of Toray-Dow Corning Co.): 45 parts by mass
Toluene: 125 parts by mass
Alumina (aluminum oxide; product of Sumitomo Chemical Co., Ltd): 5 parts by mass
The thus-prepared coating layer-forming liquid was applied onto the surface of spherical ferrites (1,000 parts by mass) having an average particle diameter of 50 μm with a fluidized-bed coater, to thereby form coating layers. In this manner, carrier particles B were obtained.
The carrier particles A (97 parts by mass) were mixed with commercially available toner particles (product of Ricoh Company, Ltd., Imagio Toner Type 7) (7 parts by mass) to thereby obtain developer B.
The thus-obtained developer B was subjected to 1,000,000 copying operations using a copier Imagio MPC5000 (product of Ricoh Company, Ltd.), to thereby obtain a used developer.
After this developer had been taken out from the copier, the toner particles of the developer were electrically removed by the blow-off method. At this time, the degree of toner spent on the carrier surface was very small. The thus-obtained sample was used as treated sample B1.

(Treatment in supercritical pure water)

Treated sample B1 (2.0 parts by mass) and pure water having an electrical conductivity of 0.91 μS.cm (3.0 parts by mass) were charged into a pressure-resistant reaction container made of SUS 316 (inner volume: 9 mL). Subsequently, the pressure-resistant reaction container was pressurized by supplying pressurized argon gas (1 MPa) from the top of the container and then left to stand for 1 min. Thereafter, the pressure-resistant reaction container was reduced in pressure to the atmospheric pressure over about 30 sec.
The pressurization/depressurization was performed three times. Subsequently, the pressure-resistant reaction container was purged with argon gas and then sealed. This reaction container was placed in a flowing sand bath heated to 385°C.
As a result, the interior of the pressure-resistant reaction container reached 385°C and 25 MPa. One hour after, the pressure-resistant reaction container was taken out and quenched in ice water.
The pressure-resistant reaction container was opened, and then the reaction product was transferred from the reaction container to a glass container. In the reaction product transferred to the glass container, black/gray relatively large particles were found to sediment, which were ferrite particles.
Also, the pure water became a white turbid suspension, which contained the coating layer itself and eluted particles of filler therein. In addition, a trace amount of oily components were also attached onto the glass wall.

(Method for washing carrier whose coating resin had been removed)

The sedimented black/gray particles were taken out from the reaction product. The thus-obtained particles were immersed in pure water containing microbubbles (particle diameter of bubbles: 2.5 μm), with an impellor being rotated under application of ultrasonic vibration for 10 min.
Here, microbubble water was constantly supplied and overflown so that attached matter was also drained to the outside. This treatment was performed three times. Thereafter, the thus-treated particles were dried for one hour in a thermostat drier set to 100°C, to thereby obtain Evaluation Sample B1. The rate of the coating resin removed was found to be 90%, and a change in magnetic characteristics was found to be 0.6% relative to core materials before use.

(Evaluation of the degree of separation between magnetic materials and coating resin)

[Surface observation by SEM]

Platinum was vacuum-evaporated on Evaluation Sample B1, and the resultant sample was observed with a scanning electron microscope S-2400 (product of Hitachi Ltd.) under the conditions of an acceleration voltage of 15 kV

and 2,000 magnification.

As a result, almost all the silicone resin coating layer was found to be removed/separated from the surface of Evaluation Sample B1.

Notably, the following evaluation criteria were used:

A: The surface of the sample was almost the same as that of a core material before coating;
B: The surface of the sample had a slight amount of residual debris of the resin;
C: About half of the surface of the sample was still covered with the coating resin;
D: A small area of the surface of the core material was exposed;
E: The surface of the core material was not exposed since almost no coating resin could be removed.

< Measurement of electrical conductivity of pure water >

The electrical conductivity of pure water was measured with an electrical conductivity meter ES-51 (handy type) (product of HORIBA Ltd.).

The electrical conductivity of the pure water used in Example B1 was found to be 0.91 μS.cm.

< Confirmation of removal of coating layer >

Using an X-ray microanalyzer EMAX2700 (product of HORIBA Ltd.), elemental analysis was performed on the surface of Evaluation Sample B1. The amount of Si detected in Evaluation Sample B1 was compared with the amount of Si detected in carrier particles B, to thereby calculate the rate of the silicone resin removed (coating layer-removal rate) according to the following equation:

$$\text{Removal rate (\%)} = \{(\text{Amount of Si detected in carrier particles B}) - (\text{Amount of Si detected in Evaluation Sample B1}) / (\text{Amount of Si detected in carrier particles B})\} \times 100$$

Notably, the following evaluation criteria were used:

A: The coating layer-removal rate was 90% or higher;
B: The coating layer-removal rate was 80% or higher but lower than 90%;
C: The coating layer-removal rate was 65% or higher but lower than 80%;
D: The coating layer-removal rate was 30% or higher but lower than 65%;
E: The coating layer-removal rate was lower than 30%.

As a result, the coating layer-removal rate was found to be 90%.

< Evaluation of magnetic characteristics >

In order to confirm a change in magnetic characteristics due to the film-removal treatment, the sample was measured for magnetic characteristics. Using a compact full-automatic vibration sample magnetometer VSM-C7-10A (product of TOEI INDUSTRY CO., LTD), the sample was measured for saturation magnetization, remnant magnetization and coercive force.

As a result, the magnetic characteristics of the Evaluation Sample were comparable to those of core materials before use.

Regarding magnetic characteristics, the following evaluation criteria based on a change relative to the saturation magnetization value (under application of 1 kOe) of core materials before coating:

A: The change was 3% or lower;
B: The change was more than 3% but 5% or lower;
C: The change was more than 5% but 7% or lower;
D: The change was more than 7% but 10% or lower;

E: The change was more than 10%.

< Measurement of particle diameter of microbubbles/nanobubbles >

The average particle diameter of bubbles was measured with a laser diffraction/scattering particle diameter analyzer (LDSA3400A, product of TOHNICHI APPLICATIONS K.K.). The particle diameter was calculated with the histogram method.

< Example B2 >

The procedure of Example B1 was repeated, except that the temperature and the pressure of the interior of the reaction container were adjusted to be higher; i.e., 395°C and 30 MPa, respectively, to thereby obtain Evaluation Sample B2.

From an electron microscope image of Evaluation Sample B2, the silicone resin was found to be removed to a large extent. The coating-layer removal rate was found to be 85%, and the magnetic characteristics were slightly changed as compared with core materials before use; i.e., a change in magnetic characteristics was found to be 1.36%.

< Example B3 >

In the same manner as in Example B1, the supercritical treatment was performed by using, as a fluid, re-purified ultra pure water (electrical conductivity: 0.08 μS.cm) instead of pure water. Under these conditions, the interior of the reaction container reached 380°C in temperature and 25 MPa in pressure. Next, the sample was transferred from the reaction container to a beaker, and then the supernatant was removed. Subsequently, pure water (100 mL) containing nanobubble water (average particle diameter of bubbles: 0.9 μm) was added to the beaker. The sample was washed for 10 min in an ultrasonic washer with the impellor being rotated, and only the sedimented particles were taken out. After dried in the same manner as in Example B1, the particles were used as Evaluation Sample B3.

Through observation of Evaluation Sample B3 under a scanning microscope, almost all the silicone resin was removed from the surfaces of the particles similar to Evaluation Sample B1. In Evaluation Sample B3, a change in magnetic characteristics was found to be 0.3% relative to core materials before use, and the coating-layer removal rate was found to be 87%. Using the above-obtained sample B3, recoated carrier particles C1 were obtained with a coating method and according to the formulation described in Examples. The recoated carrier particles C1 (97 parts by mass) were mixed with commercially available toner particles (RICOH Imagio Toner Type 7) (7 parts by mass) to obtain developer C2. At this time, the physical properties of the developer meet the standards upon delivery of Ricoh Company, Ltd.

The thus-obtained developer was subjected to 1,000,000 copying operations using a copier Imagio MPC5000 (product of Ricoh Company, Ltd.), to thereby obtain a used developer. After this developer had been taken out from the copier, the toner particles of the developer were electrically removed by the blow-off method. At this time, the degree of toner spent on the carrier surface was very small, and there were no quality problems including durability.

< Example B4 >

The procedure of Example B1 was repeated, except that pure water containing larger bubbles (average particle diameter: 250 μm) than microbubbles was used in the washing step, to thereby obtain Evaluation Sample B4. From a scanning electron microscope image of Evaluation Sample B4, the silicone resin (coating resin) was not completely removed and considerably remained on the surfaces of the core materials.

Also, the removal rate was found to be as low as 49%, and a change in magnetic characteristics was found to be 4.5% relative to core materials before use.

< Example B5 >

The procedure of Example B1 was repeated, except that there was used a commercially available developer RICOH DEV TYPE 3 for use in Spirio1510 containing, as core materials, spherical magnetites (average particle diameter: 50 μm) rather than the spherical ferrites (average particle diameter: 50 μm), to thereby obtain Evaluation Sample B5.

From a scanning electron microscope image of Evaluation Sample B5, almost all the silicone resin was found to be removed. In Evaluation Sample B5, the removal rate was found to be 90%, and a change in magnetic characteristics was found to be 1.5% relative to core materials before use. Notably, the coating layer of the carrier used in RICOH DEV TYPE 3 recovered from the market was degraded to 65% of that upon delivery.

< Example B6 >

The procedure of Example B1 was repeated, except that the temperature and the pressure of the interior of the reaction container were adjusted to be higher; i.e., 410°C and 25 MPa, respectively, to thereby obtain Evaluation Sample B6.

From an electron microscope image of Evaluation Sample B6, the silicone resin was found to be partially removed; i.e., some of the silicone resin still remained. In Evaluation Sample B6, the film-removel rate was found to be 75%, and a change in magnetic characteristics was found to be slightly observed; i.e., 2.41%.

< Example B7 >

The procedure of Example B1 was repeated, except that the temperature and the pressure of the interior of the reaction container were adjusted to be somewhat lower; i.e., 370°C and 20 MPa, respectively, to thereby obtain Evaluation Sample B7.

From an electron microscope image of Evaluation Sample B7, about half of the silicone resin was found to remain. In Evaluation Sample B7, the coating-layer removal rate was found to be 64%, and a change in magnetic characteristics was found to be slightly observed; i.e., 1.51%.

< Example B8 >

Treated sample B1 obtained in the same manner as in Example B1 was subjected to supercritical treatment under the same conditions as in Example B1. Under these conditions, the temperature and pressure of the interior of the reaction container reached 400°C and 30 MPa, respectively. Next, the thus-treated sample was transferred from the reaction container to a beaker, and then the supernatant was removed. Subsequently, pure water containing no microbubbles (100 mL) was added to the beaker, and the sample was washed for 10 min with vibration in an ultrasonic washer without rotating the impellor. This treatment was performed three times, and then only the sedimented particles were taken out. The thus-obtained particles were dried in the same manner as in Example B1, to thereby obtain Evaluation Sample B9. Through observation of Evaluation Sample B9 under a scanning electron microscope, the surfaces of the particles still had the silicone resin and residues possibly derived from the filler. Also, the coating-layer removal rate was found to be 78%, and the magnetic characteristics were considerably degraded; i.e., a change in magnetic characteristics was found to be 4.8% relative to core materials before use.

< Example B9 >

Treated sample B1 obtained in the same manner as in Example B1 was treated under the same conditions as in Example B1. Under these conditions, the temperature and pressure of the interior of the reaction container reached 385°C and 25.0 MPa, respectively. Next, the thus-treated sample was transferred from the reaction container to a beaker, and then the supernatant was removed. Subsequently, tap water (100 mL, electrical conductivity: 126 μS.cm) was added to the beaker, and the sample was washed for 10 min in an ultrasonic washer without rotating the impellor. This treatment was performed three times, and then only the sedimented particles were taken out. The thus-obtained particles were dried in the same manner as in Example B1, to thereby obtain Evaluation Sample B11. Through observation of Evaluation Sample B11 under a scanning electron microscope, much of the silicone resin was found to still remain on the surfaces of the particles. The coating-layer removal rate was found to be relatively good; i.e., 81%, and the magnetic characteristics were considerably degraded; i.e., a change in magnetic characteristics was found to be 5.6% relative to core materials before use.

< Comparative Example B1 >

The procedure of Example B1 was repeated, except that treated sample B1 (1.4 parts by mass) was charged into the reaction container and that the pure water was changed to aqueous hydrogen peroxide (concentration: 3%), to thereby obtain Evaluation Sample B8.

Through observation of Evaluation Sample B8 under a scanning electron microscope, the silicone resin was removed from the surfaces of the particles. However, the magnetic characteristics were decreased by 10% or higher as compared with core materials before use. The coating-layer removal rate was found to be good; i.e., 95%, but the magnetic characteristics were considerably degraded; i.e., a change in magnetic characteristics was found to be 11.7% relative to core materials before use.

< Comparative Example B2 >

Treated sample B1 obtained in the same manner as in Example B1 was subjected to subcritical treatment using, as a fluid, distilled water (electrical conductivity: 5.6 $\mu$S.cm) (notably, the other conditions were the same as in Example B1). Under these conditions, the temperature and pressure of the interior of the reaction container reached 270°C and 5.5 MPa, respectively. Next, the thus-treated sample was transferred from the reaction container to a beaker, and then the supernatant was removed. Subsequently, pure water (100 mL) was added to the beaker, and the sample was washed for 10 min with vibration in an ultrasonic washer while the impellor was being rotated. This treatment was performed three times, and then only the sedimented particles were taken out. The thus-obtained particles were dried in the same manner as in Example B1, to thereby obtain Evaluation Sample B10. Through observation of Evaluation Sample B10 under a scanning electron microscope, much of the silicone resin was found to still remain on the surfaces of the particles. The coating-layer removal rate was found to be low; i.e., 66%, and a change in magnetic characteristics was found to be 4.5% relative to core materials before use.

(Evaluation results of physical characteristics of core materials and carriers)

Table 3 collectively shows evaluation results of Examples B1 to B7 and Comparative Examples B1 to B4 (evaluation results of physical characteristics of core materials and carriers).

Table 3

| Items | Characteristics of treated core material | | | | | | | |
|---|---|---|---|---|---|---|---|---|
| | Surface conditions in SEM image | Removal of coating layer | | Magnetic characteristics at 2 kOe | | | Saturation magnetization (at 1 kOe) | |
| | Evaluation of surface conditions | Removal rate of coating layer | Evaluation of removal rate | Saturation magnetization (emu/g) | Remnant magnetization (emu/g) | Coercive force (Oe) | Change in saturation magnetization | Evaluation of change |
| Un-treated core materi-al | - | - | - | 66.40 | 0.56 | 6.5 | - | - |
| Ex. B1 | A | 90% | A | 66.00 | 0.54 | 6.3 | 0.60% | A |
| Ex. B2 | B | 85% | B | 65.50 | 0.52 | 6.1 | 1.36% | A |
| Ex. B3 | B | 87% | B | 66.20 | 0.55 | 6.4 | 0.30% | A |
| Ex. B4 | C | 62% | D | 64.10 | 0.57 | 6.3 | 2.88% | B |
| Ex. B5 | A | 90% | A | 65.40 | 0.54 | 6.4 | 1.51% | A |
| Ex. B6 | C | 75% | C | 64.80 | 0.56 | 6.2 | 2.41% | B |
| Ex. B7 | C | 64% | D | 65.40 | 0.55 | 6.3 | 1.51% | B |
| Ex. B8 | B | 78% | C | 62.10 | 0.55 | 6.0 | 6.50% | C |
| Ex. B9 | B | 81% | B | 61.80 | 0.58 | 6.1 | 5.60% | C |
| Comp. Ex. B1 | A | 95% | A | 58.60 | 0.56 | 6.8 | 11.70% | E |
| Comp. Ex. B2 | C | 66% | C | 63.00 | 0.57 | 6.1 | 5.10% | C |

As is clear from the data shown in Table 3, in Examples B1 to B9, it was found that there were no practical problems and the resin could be separated from used carrier particles; i.e., could be used again. In contrast, in Comparative Examples B1 and B2, it was found that the carriers could not be used again.

## Claims

1. A method for treating an electrophotographic carrier, comprising:

    treating, with supercritical pure water, the electrophotographic carrier containing at least a core material and a coating layer, so that the coating layer is separated from the core material,

    wherein the supercritical pure water is obtained by bringing, into a supercritical state, pure water having an electrical conductivity at 25°C of 1 μS.cm or lower.

2. The method according to claim 1, further comprising washing the core material with a washing liquid containing bubbles having small particle diameters.

3. The method according to one of claims 1 and 2, wherein the coating layer comprises a silicone resin.

4. The method according to any one of claims 1 to 3, wherein the supercritical pure water is obtained at a supercritical temperature of 375°C to 400°C and a supercritical pressure of 22 MPa to 30 MPa.

5. The method according to any one of claims 2 to 4, wherein the washing liquid used in the washing is microbubble water containing bubbles having an average particle diameter of 100 μm or lower.

6. The method according to any one of claims 1 to 5, wherein the core material is made of at least a magnetic material.

7. The method according to claim 6, wherein the magnetic material is ferrite or magnetite.

8. The method according to any one of claims 1 to 7, further comprising reducing, over time, the amount of decomposed or dissolved matter of a material forming the coating layer in the supercritical pure water brought into contact with the carrier.

9. The method according to any one of claims 1 to 8, wherein the carrier is a used carrier in an electrophotographic developer.

10. A method for producing an electrophotographic carrier, comprising:

    separating a coating layer from the electrophotographic carrier with the method according to any one of claims 1 to 9 to thereby recover a core material, and
    coating the core material with a coating layer for reuse.

11. A core material obtained through separation of a coating layer with the method according to any one of claims 1 to 9.

12. A carrier comprising:

    the core material according to claim 11, and
    a coating layer,

    wherein the core material is coated with the coating layer.

FIG. 1A

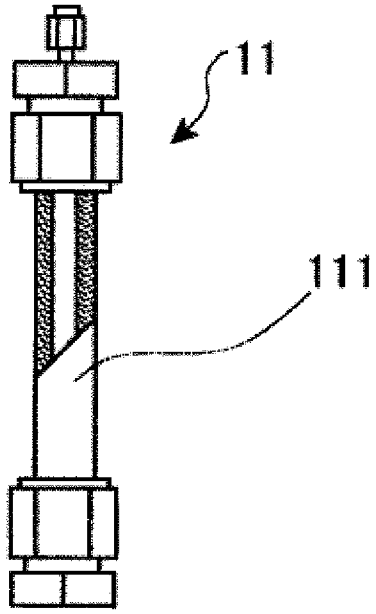


FIG. 1B

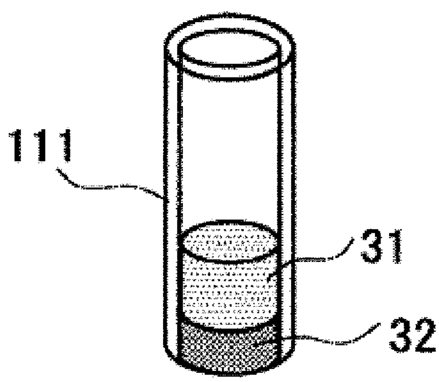

FIG. 2

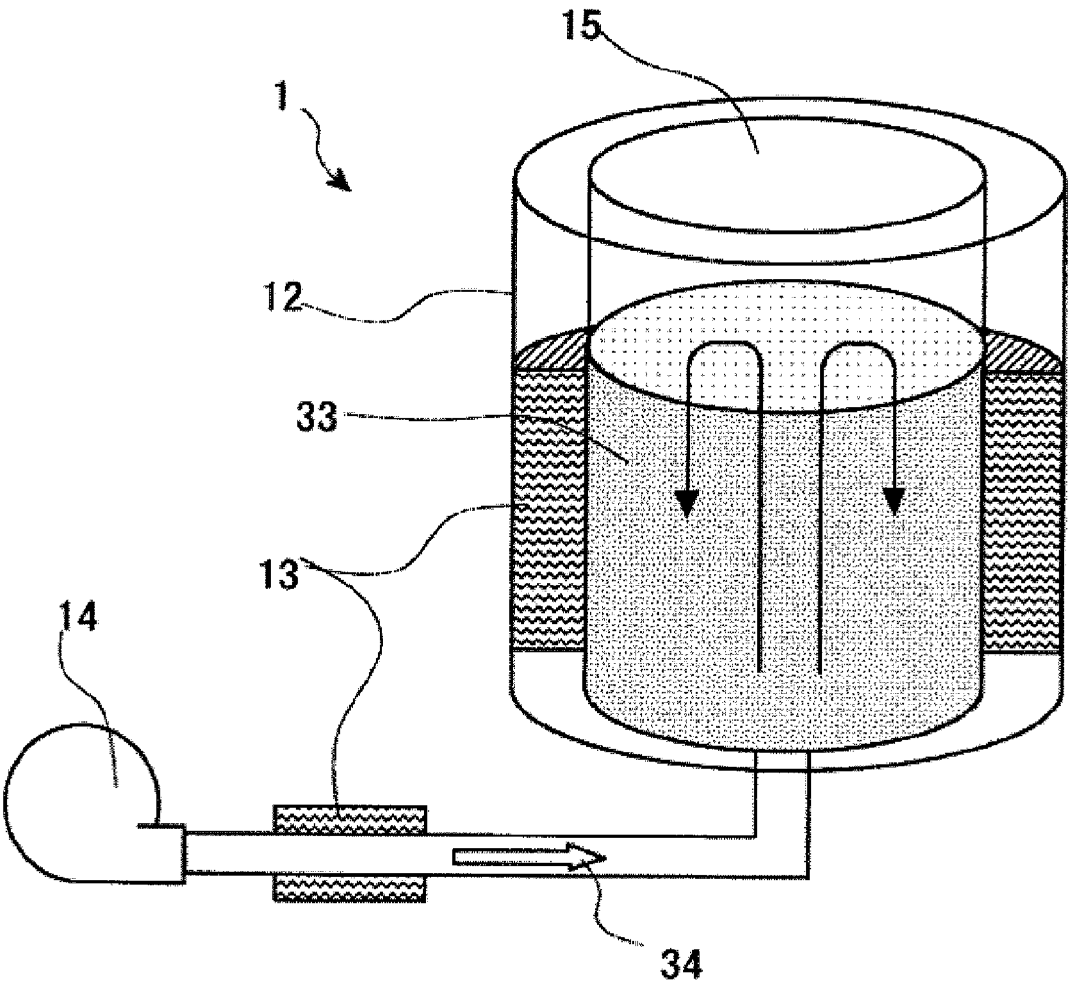

FIG. 3

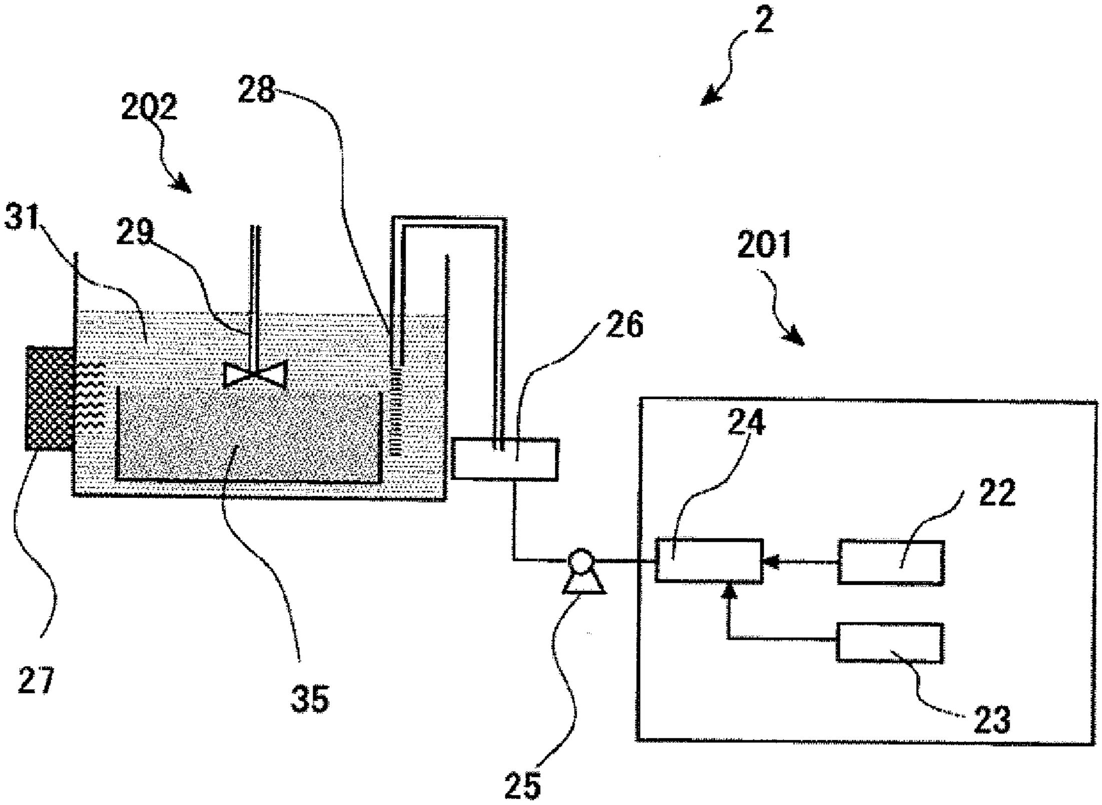

Europäisches Patentamt
European Patent Office
Office européen des brevets

# EUROPEAN SEARCH REPORT

Application Number
EP 10 19 3984

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/129103 A1 (SUGIYAMA ET AL) 10 July 2003 (2003-07-10)<br>* abstract *<br>* paragraph [0001] - paragraph [0002] *<br>* paragraph [0018] *<br>* paragraph [0043] - paragraph [0045] *<br>* paragraph [0047] - paragraph [0049] *<br>* paragraph [0073] *<br>* paragraph [0140] - paragraph [0141] *<br>* paragraph [0151] - paragraph [0155] *<br>* claims *<br>* figures *<br>----- | 1-12 | INV.<br>B08B7/00<br>G03G9/08<br>G03G9/113<br>B01D11/02 |
| A | EP 0 391 035 A2 (HUGHES AIRCRAFT COMPANY) 10 October 1990 (1990-10-10)<br>* abstract *<br>* column 4, line 55 - column 5, line 2 *<br>* column 5, line 52 - column 6, line 2 *<br>* column 7, line 1 - line 17 *<br>* claims *<br>* figures *<br>----- | 1,2,4,5,10,11 | |
| | | | TECHNICAL FIELDS SEARCHED (IPC) |
| A | EP 1 125 647 A1 (ADVANTEST CORPORATION) 22 August 2001 (2001-08-22)<br>* abstract *<br>* paragraph [0008] - paragraph [0009] *<br>* paragraph [0018] *<br>* paragraph [0041] *<br>* claims *<br>* figures *<br>----- | 1,2,4,5,10 | B08B<br>G03G<br>B01D |
| A | US 2007/160923 A1 (MATSUMOTO ET AL) 12 July 2007 (2007-07-12)<br>* abstract *<br>* paragraph [0118] *<br>* paragraph [0159] - paragraph [0163] *<br>* paragraph [0208] *<br>* claims *<br>* figure *<br>----- | 1,3,6,7,9-12 | |

The present search report has been drawn up for all claims

1

| Place of search | Date of completion of the search | Examiner |
|---|---|---|
| The Hague | 12 April 2011 | van der Zee, Willem |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 10 19 3984

This annex lists the patent family members relating to the patent documents cited in the above-mentioned European search report.
The members are as contained in the European Patent Office EDP file on
The European Patent Office is in no way liable for these particulars which are merely given for the purpose of information.

12-04-2011

| Patent document cited in search report | Publication date | Patent family member(s) | Publication date |
|---|---|---|---|
| US 2003129103 A1 | 10-07-2003 | NONE | |
| EP 0391035 A2 | 10-10-1990 | AT 108224 T | 15-07-1994 |
| | | CA 2009748 A1 | 03-10-1990 |
| | | DE 69010368 D1 | 11-08-1994 |
| | | DE 69010368 T2 | 03-11-1994 |
| | | DK 0391035 T3 | 01-08-1994 |
| | | JP 2770883 B2 | 02-07-1998 |
| | | JP 3068139 A | 25-03-1991 |
| | | NO 901480 A | 04-10-1990 |
| | | US 5068040 A | 26-11-1991 |
| | | US 5215592 A | 01-06-1993 |
| | | US 5236602 A | 17-08-1993 |
| EP 1125647 A1 | 22-08-2001 | WO 0020140 A1 | 13-04-2000 |
| | | JP 2000107725 A | 18-04-2000 |
| | | TW 425315 B | 11-03-2001 |
| US 2007160923 A1 | 12-07-2007 | CN 101000473 A | 18-07-2007 |
| | | JP 4313366 B2 | 12-08-2009 |
| | | JP 2007187834 A | 26-07-2007 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5127432 A
- JP 5216282 A
- JP 5216283 A
- JP 5197211 A
- JP 7114221 A
- JP 8087137 A
- JP 6194881 A
- JP 62061948 B
- JP 6149132 A
- JP 47012286 A
- JP 5053000 A
- JP 10024274 A
- JP 9111249 A
- JP 2007206614 A
- JP 4244197 B
- JP 3847534 B
- JP 3853159 B
- JP 10080674 A
- JP 10087872 A


### Non-patent literature cited in the description


- Advanced Research Project for Utilizing Supercritical Fluid. New Energy Development Organization leading, 1997